# EUROPÄISCHE PATENTANMELDUNG

(11) **EP 3 816 895 A1**
(43) Veröffentlichungstag der Anmeldung: **05.05.2021**
(21) Anmeldenummer: 20198017.4
(22) Anmeldetag: 24.09.2020
(51) Int. Cl.: G06Q 10/08, B66F 9/06, B66F 17/00

(54) **VERFAHREN ZUM BETREIBEN EINES FLURFÖRDERZEUGS UND INTRALOGISTISCHES SYSTEM ZUR DURCHFÜHRUNG DES VERFAHRENS**

(30) Priorität: 28.10.2019 DE 102019129006
(71) Anmelder: Linde Material Handling GmbH, 63743 Aschaffenburg (DE)
(72) Erfinder: GROH, Jonas, 63743 Aschaffenburg (DE); TREBER, Florian, 63739 Aschaffenburg (DE)
(74) Vertreter: Patentship Patentanwaltsgesellschaft mbH

(57) **Zusammenfassung**

Die Erfindung betrifft ein Verfahren zum Betreiben mindestens eines Flurförderzeugs (1) in einem intralogistischen System, wobei mittels mindestens eines Kollisionsschutzsystems (7) des Flurförderzeugs (1) eine Überwachung mindestens eines Sicherheitsfeldes (S1) in einem Umgebungsbereich des Flurförderzeugs (1) durchgeführt wird, sowie ein intralogistisches System zur Durchführung des Verfahrens. Es wird vorgeschlagen, dass das vom Kollisionsschutzsystem (7) des Flurförderzeugs (1) überwachte Sicherheitsfeld (S1) mit mindestens einem weiteren, von mindestens einem weiteren Kollisionsschutzsystem (13) des intralogistischen Systems überwachten, Sicherheitsfeld (S2) gekoppelt wird.

## Beschreibung

Die Erfindung betrifft ein Verfahren zum Betreiben mindestens eines Flurförderzeugs in einem intralogistischen System, wobei mittels mindestens eines Kollisionsschutzsystems des Flurförderzeugs eine Überwachung mindestens eines Sicherheitsfeldes in einem Umgebungsbereich des Flurförderzeugs durchgeführt wird, sowie ein intralogistisches System zur Durchführung des Verfahrens.

Unter einem intralogistischen System versteht man ein System, bei dem logistische Material- und Warenflüsse innerhalb eines Betriebsgeländes abgewickelt werden. Mit diesem Begriff wird eine Abgrenzung zum Warentransport außerhalb eines Werkes, z.B. durch eine Spedition, erreicht. Intralogistische Systeme umfassen insbesondere Geräte zur Lager- und Fördertechnik, Hebezeuge, Flurförderzeuge, Kommissioniergeräte, Palettiergeräte, Verpackungsgeräte sowie lagerhallenspezifische Einrichtungen, wie z.B. automatische Tore. Solche Geräte und Einrichtungen bilden die technischen Prozessteilnehmer des intralogistischen Systems. Außerdem gehören zu diesem intralogistischen System auch prozessteilnehmende Betriebspersonen, z.B. Bedienpersonen von Flurförderzeugen, Lagermitarbeiter und Lagerleiter.

Flurförderzeuge, die automatisiert oder teilautomatisiert betrieben werden, weisen zur Vermeidung von Kollisionen mit nicht-ortsfesten Gegenständen bzw. Hindernissen, beispielsweise mit anderen Flurförderzeugen oder Personen, ein am Flurförderzeug angeordnetes und somit fahrzeugfestes Kollisionsschutzsystem auf, mit dem eine Überwachung eines Sicherheitsfeldes in einem Umgebungsbereich des Flurförderzeugs auf Hindernisse durchgeführt wird. Das an dem Flurförderzeug angeordnete und somit fahrzeugfeste Kollisionsschutzsystem arbeitet in der Regel mit einem oder mehreren Lasersensoren, beispielsweise Laserscannern. Ein derartiges an dem Flurförderzeug angeordnetes und somit fahrzeugfestes Kollisionsschutzsystem wird auch als Personenschutzanlage bezeichnet.

Bei manuell bedienten Flurförderzeugen können auch extern angebrachte Spiegel, beispielsweise an schlecht einsehbaren Kreuzungen, oder Einweiser-Personen zum Einsatz kommen, um ein sicheres Rangieren zu gewährleisten, wenn der Fahrzeugbediener seinen Fahrweg nicht komplett einsehen kann.

Außerdem sind stationäre Personenschutzanlagen, beispielsweise Zäune und elektrisch überwachte Türen sowie Lichtvorhänge und Lichtschranken bekannt, welche verhindern, dass Personen in den Arbeitsbereich stationär arbeitender Maschinen, insbesondere stationärer Industrieroboter, gelangen. Die Maschinen können auch beim Zutritt einer Person in den Arbeitsbereich automatisch angehalten werden. Es kann auch beispielsweise ein Regalgang in einer Regalanlage an jedem Ende jeweils mit einer Lichtschranke überwacht werden, so dass das Flurförderzeug innerhalb des Regalgangs ohne eigenes Kollisionsschutzsystem bzw. Personenschutzanlage fahren kann.

Kollisionsschutzsysteme mit optischen Signalsendern und Signalempfängern kommen bei Flurförderzeugen in Systemen zur Kollisionsvermeidung oder zur Navigation zum Einsatz. Insbesondere bei automatisierten oder teilautomatisierten Flurförderzeugen spielen optische Sensoren eine große Rolle, damit sich das Flurförderzeug gefahrlos autonom bewegen kann oder zumindest der Fahrer des Flurförderzeugs mittels Assistenzsystemen unterstützt werden kann. So sind bereits autonome Flurförderzeuge im Einsatz, die sich fahrerlos durch Lagerhallen bewegen und selbsttätig Positionen zum Aufnehmen und Abgeben von Waren ansteuern. Ein Beispiel für derartige autonome Flurförderzeuge sind mobile Kommissionierroboter, die sich automatisiert durch ein Lager bewegen können und mit Hilfe eines Greifsystems, insbesondere eines Roboterarms, Objekte zum Beispiel aus einem Regal aufnehmen können.

Bei teil- oder vollautomatisierten Flurförderzeugen sind Systeme zur Umgebungsüberwachung, insbesondere zur Kollisionsvermeidung, erforderlich, damit ein sicherer Betrieb der Flurförderzeuge gewährleistet ist und ein unbeabsichtigtes Auffahren auf ein Hindernis oder gar eine Verletzung einer auf der Fahrbahn des Flurförderzeugs befindlichen Person verhindert wird.

Die gängigen Methoden zur Umgebungsüberwachung und Kollisionsvermeidung bei Flurförderzeugen basieren auf Distanzmessung mittels Laser, Ultraschall oder Radar. Dabei wird der direkte Freiraum in Fahrtrichtung des Flurförderzeugs ermittelt. Die Umgebungsüberwachung mittels Laserscanner erfordert einen erheblichen Investitionsaufwand. Ein Laserscanner besteht aus einer Laserdiode und einem Empfänger, die sich in einem motorangetriebenen, rotierenden Kopf befinden, sowie einem hochauflösenden Inkrementalgeber zur Winkelmessung. Das auf ein Hindernis auffallende Laserlicht wird in sich selbst, also zum Sender, bzw. zu einem unmittelbar daneben montierten Empfänger reflektiert. Da es sich bei Laserscanner bzw. Lasersensoren um Präzisionsgeräte handelt sowie für die Auswertung der dreidimensionalen Messdaten ein aufwendiger Auswerterechner erforderlich ist und die exakte Kalibrierung des Laserscanners einen erheblichen apparativen Aufwand notwendig macht, ist diese Methode sehr teuer. Andererseits ist die Messgenauigkeit bei Radar- und Ultraschallmethoden nicht hoch genug, um fein darauf reagieren zu können.

Kamerabasierte Systeme werden bisher hauptsächlich zur Navigation eingesetzt. Hierzu werden üblicherweise paarweise Kameras zu Stereokamerasystemen zusammengeschaltet, die ein dreidimensionales Bild des gesamten umgebenden Raums aufnehmen. Dabei werden sehr hohe Datenmengen erzeugt, deren Verarbeitung einen erheblichen Rechenaufwand erfordert.

Bisher werden solche Kollisionsschutzsysteme zur Überwachung der Umgebung des Flurförderzeugs nur räumlich sehr konzentriert eingesetzt. Um einen omnidirektionalen Blick zu ermöglichen, müssen die Kollisionsschutzsysteme mehrfach am Flurförderzeug verbaut werden. Dies ist insbesondere im Falle von Kollisionsschutzsystemen mit Laserscannern sehr kostenintensiv. Außerdem benötigen solche Kollisionsschutzsysteme einen großen Bauraum, so dass sie nur an bestimmten Stellen des Flurförderzeugs angebracht werden können.

Bekannte teil- oder vollautomatisierte Flurförderzeuge verfügen in der Regel über ein fahrzeugfestes Kollisionsschutzsystem, um eine Kollision des Flurförderzeugs mit nicht-ortsfesten Hindernissen, beispielsweise Personen, zu verhindern. Durch die Integration des Kollisionsschutzsystems in das Flurförderzeug hat das Kollisionsschutzsystem jedoch lediglich einen begrenzten Sichtbereich. Der Sichtbereich kann erweitert werden, wenn das Kollisionsschutzsystem mehrere Sensoren am Flurförderzeug aufweist. Obwohl der begrenzte Sichtbereich von in das Flurförderzeug integrierten Sensoren des Kollisionsschutzsystems durch die Verwendung zusätzlicher Sensoren am Flurförderzeug erweitert werden kann, können unter Umständen bestimmte Bereiche um das Flurförderzeug trotzdem nicht überwacht werden. Dies kann beispielsweise der Fall sein, wenn solche Bereiche durch eine aufgenommene Last verdeckt werden.

Fährt beispielsweise das Flurförderzeug in eine Richtung, deren Fahrweg nicht durch das fahrzeugeigene Kollisionsschutzsystems einsehbar ist, muss das Flurförderzeug sehr langsam fahren. Dies reduziert die tatsächliche Umschlagleistung des Flurförderzeugs, besonders bei häufigen Fahrtrichtungswechseln und engen Fahrmanövern.

Ebenso gibt es Probleme, wenn ein automatisiertes Flurförderzeug ein anderes Flurförderzeug belädt, und es auf der entgegengesetzten Seite des zu beladenden Flurförderzeugs zu einer Gefährdung kommen kann. Dieser Bereich kann durch das Sicherheitsfeld und das Kollisionsschutzsystem des beladenden Flurförderzeugs nicht eingesehen werden, da dieser Bereich von dem zu beladenden Fahrzeug abgeschattet wird.

Heutige Kommissionierroboter, die Waren an ein anderes Flurförderzeug übergeben, handhaben entweder nur kleine Lasten, so dass weder durch den Roboterarm des Kommissionierroboters noch durch die Last eine erhebliche Gefährdung entstehen kann, oder die Kommissionierroboter sind derart gestaltet, dass es hinter dem zu beladenden Fahrzeug zu keiner Gefährdung kommen kann. Dies kann beispielsweise durch Übergabe der aufgenommen Last in ein geschlossenes Regalsystem erreicht werden.

Aus der DE 10 2018 109 299 A1 ist ein Verfahren zum Betreiben von teilautomatisierten oder automatisierten Flurförderzeugen bekannt, bei dem mindestens zwei Flurförderzeuge über eine drahtlose Datenverbindung, insbesondere eine Funkverbindung, Informationen austauschen. Auf diese Weise kann das jeweilige Flurförderzeug seine verfügbaren Daten, insbesondere Sensordaten und/oder Fahrzeugzustandsdaten, über die eigene Systemgrenze hinaus mit anderen Flurförderzeugen teilen, damit diese die Daten von anderen Flurförderzeugen für ihre eigenen Aufträge nutzen können.

Der vorliegenden Erfindung liegt die Aufgabe zugrunde, ein Verfahren der eingangs genannten Art sowie ein intralogistisches System so auszugestalten, dass auch in schlecht einsehbaren Umgebungsbereichen des Flurförderzeugs ein sicherer Kollisionsschutz gewährleistet ist.

Diese Aufgabe wird erfindungsgemäß dadurch gelöst, dass das vom Kollisionsschutzsystem des Flurförderzeugs überwachte Sicherheitsfeld mit mindestens einem weiteren, von mindestens einem weiteren Kollisionsschutzsystem des intralogistischen Systems überwachten, Sicherheitsfeld gekoppelt wird.

Der erfindungsgemäße Gedanke besteht somit darin, dass ein Flurförderzeug das Sicherheitsfeld seines fahrzeugfesten Kollisionsschutzsystems dadurch erweitert, dass es ein weiteres Kollisionsschutzsystem des intralogistischen Systems und somit ein weiteres externes Kollisionsschutzsystem nutzt und das fahrzeugfeste Kollisionsschutzsystem mit dem weiteren, externen Kollisionsschutzsystem koppelt.

Dabei liegt der Erfindung die Überlegung zu Grunde, dass eine Optimierung des Kollisionsschutzes erreicht werden kann, wenn nicht nur Sensordaten zwischen Teilnehmern des intralogistischen Systems ausgetauscht werden, um die Reichweite von fahrzeugeigenen Sensoren zu vergrößern, sondern ganze Sicherheitsfelder gekoppelt werden. Sicherheitsfelder zeichnen sich dadurch aus, dass bestimmte Bereiche mittels eines Kollisionsschutzsystems abgesichert werden. Dies bedeutet, dass vom Kollisionsschutzsystem erkannt wird, ob ein Sicherheitsfeld sicher, also beispielsweise frei von Hindernissen oder Personen ist. In diesem Fall wird das Sicherheitsfeld freigegeben. Eine Kopplung von Sicherheitsfeldern geht also weit über einen bloßen Austausch von Sensordaten hinaus.

In einer vorteilhaften Ausgestaltung der Erfindung wird als weiteres Kollisionsschutzsystem ein mobiles Kollisionsschutzsystem verwendet. Auf diese Weise wird eine besonders flexible Absicherung von Arbeitsbereichen auch in unübersichtlichen Betriebsumgebungen ermöglicht.

Dabei kann als mobiles Kollisionsschutzsystem ein Kollisionsschutzsystem eines weiteren Flurförderzeugs verwendet werden. Häufig bewegen sich mehrere Flurförderzeuge beispielsweise in einer Lagerhalle. Durch Kopplung der von den Kollisionsschutzsystemen der einzelnen Flurförderzeuge überwachten Sicherheitsfelder kann somit eine großflächige Absicherung der Arbeitsbereiche der Flurförderzeuge erreicht werden.

Gemäß einer Weiterbildung des Erfindungsgedankens wird als mobiles Kollisionsschutzsystem ein Kollisionsschutzsystem eines Sicherheitsfahrzeugs verwendet. Dabei handelt es sich um ein speziell zur Absicherung von Arbeitsbereichen des Flurförderzeugs vorgesehenes, zusätzliches Fahrzeug. Da das Sicherheitsfahrzeug lediglich Sicherungsaufgaben, aber keine Transport- oder Lasthandhabungsaufgaben erfüllen soll, kann es sehr klein und kostengünstig gebaut sein.

Das Sicherheitsfahrzeug kann dem Flurförderzeug als Begleitfahrzeug zugeordnet sein. Beispielsweise kann es dem Flurförderzeug vorauseilend fahren und Gefahrenbereiche absichern, insbesondere bei einer Einfahrt in einen Laderaum eines Lastkraftwagens oder eines Güterwaggons oder eines Blocklagers.

Das Sicherheitsfahrzeug kann aber auch einem Gefahrenbereich innerhalb des intralogistischen Systems zugeordnet sein oder auftragsbezogen Sicherheitsfelder im intralogistischen System überwachen.

Eine andere vorteilhafte Ausgestaltung der Erfindung sieht vor, dass als weiteres Kollisionsschutzsystem ein stationäres Kollisionsschutzsystem verwendet wird.

Dabei kann als stationäres Kollisionsschutzsystem insbesondere ein an einem schlecht einsehbaren Bereich des intralogistischen Systems angeordnetes Kollisionsschutzsystem verwendet werden. Das Flurförderzeug kann somit durch die Kopplung mit dem stationären Kollisionsschutzsystem um die Ecke sehen.

Mit Vorteil kann als stationäres Kollisionsschutzsystem auch ein an einer Lastabgabestelle des intralogistischen Systems angeordnetes Kollisionsschutzsystem verwendet werden. Das Flurförderzeug kann hierdurch durch die Kopplung mit dem stationären Kollisionsschutzsystem schneller und sicherer mit einer Last voraus fahren, die das fahrzeugeigene Kollisionsschutzsystem abschattet.

Eine besonders bevorzugte Ausgestaltung der Erfindung sieht vor, dass die Kopplung der Sicherheitsfelder folgende Verfahrensschritte umfasst:
a) Annäherung des Kollisionsschutzsystems des Flurförderzeugs und des weiteren Kollisionsschutzsystems des intralogistischen Systems,
b) Aufbau einer Datenverbindung zwischen dem Kollisionsschutzsystem des Flurförderzeugs und dem weiteren Kollisionsschutzsystem,
c) Prüfung durch das weitere Kollisionsschutzsystem, ob das vom weiteren Kollisionsschutzsystem überwachte Sicherheitsfeld sicher ist, und
d) Senden eines Freigabesignals vom weiteren Kollisionsschutzsystem an das Kollisionsschutzsystem des Flurförderzeugs über die Datenverbindung, falls das vom weiteren Kollisionsschutzsystem überwachte Sicherheitsfeld frei ist, oder Senden eines Belegtsignals vom weiteren Kollisionsschutzsystem an das Kollisionsschutzsystem des Flurförderzeugs über die Datenverbindung, falls das vom weiteren Kollisionsschutzsystem überwachte Sicherheitsfeld belegt ist.

Dabei wird der Ablauf der Verfahrensschritte vorzugsweise automatisch durch elektronische Steuerungseinrichtungen gesteuert, die in die Kollisionsschutzsysteme und/oder Fahrzeugsteuerungen integriert sein können. Der Aufbau der Datenverbindung zwischen dem Kollisionsschutzsystem des Flurförderzeugs und dem weiteren, externen Kollisionsschutzsystem beinhaltert vorteilhafterweise eine Identifizierung, um sicherzustellen, dass die richtigen Kollisionsschutzsysteme miteinander kommunizieren.

Vorteilhafterweise wird das vom weiteren Kollisionsschutzsystem überwachte Sicherheitsfeld vom Flurförderzeug genutzt, solange das Freigabesignal gesendet wird, oder das vom weiteren Kollisionsschutzsystem überwachte Sicherheitsfeld vom Flurförderzeug gemieden, solange das Belegtsignal gesendet wird. Dabei werden das Freigabesignal und/oder das Belegtsignal zweckmäßigerweise kontinuierlich ausgesendet. Beispielsweise kann ein Beladungsvorgang durch das Flurförderzeug solange durchgeführt werden, bis das Freigabesignal nicht mehr empfangen wird.

Gemäß einer besonders vorteilhaften Ausgestaltung der Erfindung kommuniziert das Kollisionsschutzsystem des Flurförderzeugs mit dem weiteren Kollisionsschutzsystem mittels optischer Kommunikation. Dadurch wird sichergestellt, dass die richtigen Kommunikationspartner, nämlich benachbarte Kollisionsschutzsysteme im intralogistischen System, zum Beispiel benachbarte Flurförderzeuge, die sich in Sichtweite befinden, miteinander kommunizieren. Somit wird verhindert, dass beispielsweise ein Flurförderzeug in einem entfernten Regalgang anstelle eines benachbarten Flurförderzeugs kontaktiert wird.

Zur optischen Kommunikation werden vorzugsweise mindestens eine optische Sendeeinrichtung und mindestens eine optische Empfangseinrichtung verwendet.

Dabei können als optische Sendeeinrichtung insbesondere ein Infrarotsender und als optische Empfangseinrichtung ein Infrarotempfänger und somit eine Infrarotschnittstelle verwendet werden.

Zweckmäßigerweise werden als optische Sendeeinrichtung ein Leuchtmittel und als optische Empfangseinrichtung eine Kamera verwendet. Hierzu können beispielsweise vorhandene Lichter an den Flurförderzeugen in Kombination mit einer Kamera verwendet werden, um mittels eines Flickercodes zu kommunizieren. Eine monoculare Kamera genügt für den Zweck der Erfindung. Sofern weitergehende Navigations- und Assistenzaufgaben gewünscht sind, kann die Kamera auch als Stereokamera ausgebildet sein, die ein räumliches Sehen erlaubt.

Eine weitere vorteilhafte Ausgestaltung sieht vor, dass das Kollisionsschutzsystem des Flurförderzeugs mit dem weiteren Kollisionsschutzsystem mittels Funk-Kommunikation kommuniziert.

Zweckmäßigerweise wird zur Funk-Kommunikation eine Bluetooth-Übertragung verwendet.

Mit besonderem Vorteil nutzt die Funk-Kommunikation die Near-Field-Communication-Technologie (NFC). Die Near-Field-Communication-Technologie ist beispielsweise aus dem Bereich der Smartphones bekannt und wird umfangreich eingesetzt, etwa für Bezahlfunktionen. Durch die Verwendung in großem Umfang ist eine solche Datenübertragungseinrichtung kostengünstig und in hohen Stückzahlen erhältlich. Zugleich wird eine ausreichend hohe Datenübertragungsrate und auch Speichergröße erreicht.

Die Reichweite der Funk-Kommunikation kann beispielsweise auf ca. 10 cm bis 500cm begrenzt sein.

Zur Funk-Kommunikation können auch so genannte RFID-Transponder eingesetzt werden.

RFID (englisch: Radio Frequency Identification) bezeichnet eine Technologie zum automatischen und berührungslosen Identifizieren und Lokalisieren von Objekten mit Radiowellen. Herkömmliche RFID-Systeme bestehen aus einem Transponder (auch als Funketikett bezeichnet) und einem Lesegerät.

Der Transponder enthält einen kennzeichnenden Code, der durch das Lesegerät ausgelesen werden kann. Hierzu erfolgt eine Kopplung durch vom Lesegerät erzeugte magnetische Wechselfelder in geringer Reichweite.

Auf diese Weise werden bei passiven RFID Transpondern nicht nur Daten übertragen, sondern es wird auch der Transponder mit Energie versorgt. Die über die Antenne des passiven RFID Transponders aufgenommene Hochfrequenzenergie dient während des Kommunikationsvorgangs als Stromversorgung für seinen Mikrochip.

Der so aktivierte Mikrochip decodiert die vom Lesegerät gesendeten Befehle. Die Antwort codiert und moduliert der passive RFID Transponder in das eingestrahlte elektromagnetische Feld durch Feldschwächung oder gegenphasige Reflexion des vom Lesegerät ausgesendeten Feldes. Der passive RFID Transponder erzeugt also selbst kein Feld, sondern beeinflusst das Sendefeld des Lesegeräts. Aktive RFID Transponder verfügen über eine eigene Stromversorgung.

Wenn die Funk-Kommunikation nur eine geringe Sendereichweite und Empfangsreichweite aufweist, wie beispielsweise bei der Near-Field-Communication-Technologie (NFC) oder der Transponder-Technologie (RFID), ist auch ein guter Schutz gegen Störungen und Manipulationen gegeben.

Zur Überwachung der Sicherheitsfelder werden als Sensoren zur Umgebungserkennung bzw. Umgebungswahrnehmung zweckmäßigerweise Kollisionsschutzsensoren eingesetzt. Dabei kann es sich insbesondere um 2D- oder 3D-Laserscanner, Mono- oder Stereokameras oder 3D ToF (time of flight)-Kameras handeln.

Bevorzugt wird als Flurförderzeug ein autonomes Flurförderzeug, insbesondere ein mobiler Kommissionierroboter, verwendet. Mobile Kommissionierroboter sind Flurförderzeuge, die beispielsweise Packstücke mittels Roboterarmen selbsttätig aufnehmen können.

Die Erfindung betrifft ferner ein intralogistisches System zur Durchführung des Verfahrens mit mindestens einem zur Überwachung mindestens eines Sicherheitsfeldes ausgebildeten Kollisionsschutzsystem eines Flurförderzeugs und mit mindestens einem zur Überwachung mindestens eines weiteren Sicherheitsfeldes ausgebildeten weiteren Kollisionsschutzsystem des intralogistischen Systems, wobei die Kollisionsschutzsysteme über Kollisionsschutzsensoren und Datenverarbeitungseinrichtungen sowie Datensende- und Datenempfangseinrichtungen verfügen.

Beim intralogistischen System wird die gestellte Aufgabe dadurch gelöst, dass die Datenverarbeitungseinrichtungen sowie Datensende- und Datenempfangseinrichtungen dazu eingerichtet sind, die von den Kollisionsschutzsystemen überwachten Sicherheitsfelder zu koppeln.

Die Erfindung bietet eine ganze Reihe von Vorteilen:
Durch die Kopplung des vom fahrzeugfesten Kollisionsschutzsystem des Flurförderzeugs überwachten Sicherheitsfeldes mit mindestens einem von einem weiteren, externen Kollisionsschutzsystem überwachten Sicherheitsfeld erweitert das Flurförderzeug in einfacher Weise das Sicherheitsfeld seines Kollisionsschutzsystem, indem es zusätzlich das Sicherheitsfeld des weiteren, externen Kollisionsschutzsystems nutzt. Das Flurförderzeug benötigt zudem weniger eigene Kollisionsschutzsensoren. Damit kann das Flurförderzeug kostengünstiger hergestellt werden.

Außerdem können, insbesondere autonome, Flurförderzeuge deutlich schnellere Fahrmanöver (z.B. Wendemanöver) durchführen, auch wenn die Sicht des fahrzeugeigenen Kollisionsschutzsystems auf den Fahrweg beispielsweise durch eine Last behindert ist. Dadurch kann die Umschlagleistung erhöht werden.

Ferner können günstigere Basisfahrzeuge als Flurförderzeuge eingesetzt werden, die beispielsweise ohne freitragende Gabelzinken auskommen, welche ansonsten nötig wären, damit die fahrzeugeigenen Kollisionsschutzsensoren unter der Last durchschauen können.

Darüber hinaus können Gefahrenbereiche, beispielsweise Lastaufnahme- und Ablagestellen sicher überwacht werden.

Dabei profitieren von der Erfindung nicht nur autonome Flurförderzeuge, sondern auch manuell bediente Flurförderzeuge, weil die Bedienperson durch die verbesserten Kollisionsschutzsysteme optimal unterstützt wird, so dass das Risiko von Personenunfällen erheblich reduziert wird.

Weitere Vorteile und Einzelheiten der Erfindung werden anhand der in den schematischen Figuren dargestellten Ausführungsbeispiele näher erläutert. Hierbei zeigen
- Figur 1: ein Flurförderzeug beim Beladen eines weiteren Flurförderzeugs, wobei das Sicherheitsfeld des beladenden Flurförderzeugs überwacht wird,
- Figur 2: ein Flurförderzeug beim Beladen eines weiteren Flurförderzeugs, wobei die Sicherheitsfelder beider Flurförderzeuge gekoppelt sind,
- Figur 3: ein Flurförderzeug beim Greifen in ein Regal, wobei das Sicherheitsfeld des greifenden Flurförderzeugs überwacht wird,
- Figur 4: ein Flurförderzeug beim Greifen in ein Regal, wobei das Sicherheitsfeld des greifenden Flurförderzeugs mit dem Sicherheitsfeld eines weiteren Flurförderzeugs im Nachbargang des Regals gekoppelt ist,
- Figur 5: ein unbeladenes Flurförderzeug mit Kollisionsschutzsystem zur Überwachung des Sicherheitsfeldes,
- Figur 6: ein beladenes Flurförderzeug mit Kollisionsschutzsystem zur Überwachung des Sicherheitsfeldes, wobei ein Bereich des Sicherheitsfeldes durch die Ladung abgeschattet ist und
- Figur 7: ein beladenes Flurförderzeug mit Kollisionsschutzsystem zur Überwachung des Sicherheitsfeldes, wobei das Kollisionsschutzsystem mit einem externen Kollisionsschutzsystem kommuniziert.

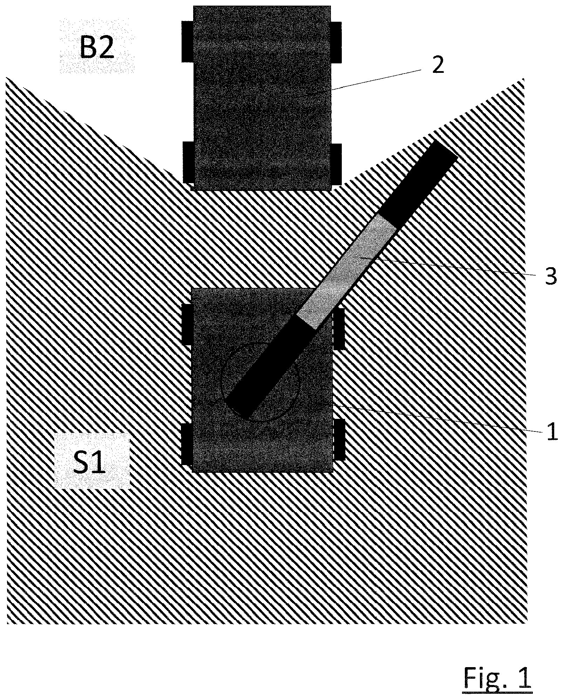

In der Figur 1 ist ein Flurförderzeug 1 beim Beladen eines weiteren Flurförderzeugs 2 dargestellt. Das Flurförderzeug 1 weist ein fahrzeugfestes, nicht näher dargestelltes Kollisionsschutzsystem auf, das ein oder mehrere Kollisionsschutzsensoren aufweist und von dem das Sicherheitsfeld S1 des beladenden Flurförderzeugs 1 überwacht wird. Die Flurförderzeuge 1, 2 können beispielsweise als automatisierte Fahrzeuge ausgebildet sein. Das beladende Flurförderzeug 1 ist beispielsweise als mobiler Kommissionierroboter ausgebildet, der über ein Lasthandhabungsmittel 3, beispielsweise einen Roboterarm, verfügt. Das zu beladende Flurförderzeug 2 ist beispielsweise als automatisiertes Transportfahrzeug ausgebildet, das mit Lasten beladen werden kann. Beim Beladen des Flurförderzeugs 2 durch das Flurförderzeug 1 kann es auf der entgegengesetzten Seite des zu beladenden Flurförderzeugs 2 zu einer Gefährdung kommen, weil der Bereich B2 durch das Sicherheitsfeld S1 des beladenden Flurförderzeugs 1 nicht eingesehen werden kann und somit der Bereich B2 nicht von dem fahrzeugfesten Kollisionsschutzsystem des Flurförderzeugs 1 überwacht werden kann. Der Bereich B2 ist nämlich von dem zu beladenden Flurförderzeug 2 abgeschattet.

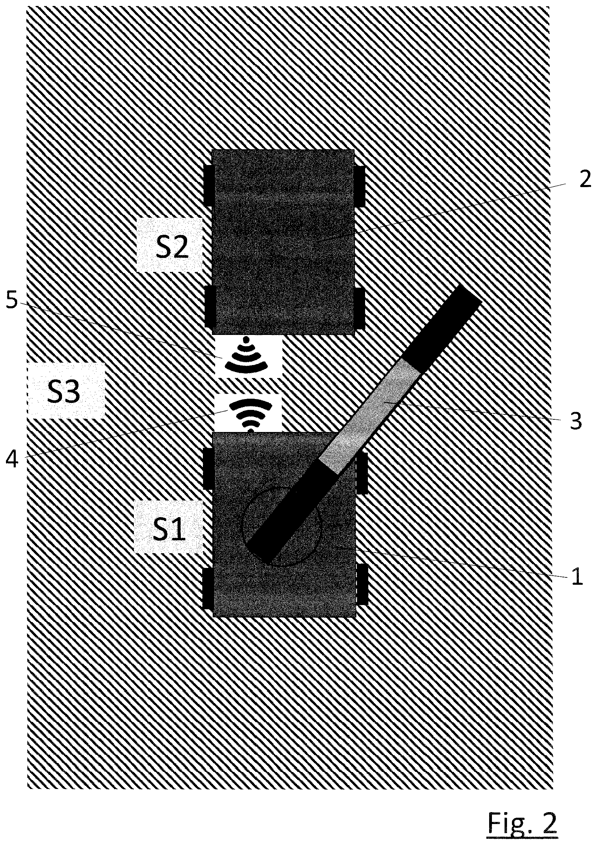

Die Figur 2 zeigt ein Flurförderzeug 1 beim Beladen eines weiteren Flurförderzeugs 2 analog zu der Figur 1, wobei beide Flurförderzeuge 1, 2 über eigene Überwachungen von Sicherheitsfeldern S1, S2 verfügen. Das Flurförderzeug 1 weist ein fahrzeugfestes, nicht näher dargestelltes Kollisionsschutzsystem auf, das ein oder mehrere Kollisionsschutzsensoren aufweist und von dem das Sicherheitsfeld S1 des beladenden Flurförderzeugs 1 überwacht wird. Das Flurförderzeug 2 weist ein fahrzeugfestes, nicht näher dargestelltes Kollisionsschutzsystem auf, das ein oder mehrere Kollisionsschutzsensoren aufweist und von dem das Sicherheitsfeld S2 des zu beladenden Flurförderzeugs 1 überwacht wird. Dabei können die Sicherheitsfelder S1, S2 beider Flurförderzeuge 1, 2 zu einem gemeinsamen Sicherheitsfeld S3 gekoppelt werden. Das von dem Kollisionsschutzsystem des Flurförderzeugs 1 überwachte Sicherheitsfeld S1 wird hierbei mit dem von dem weiteren, externen Kollisionsschutzsystem des Flurförderzeugs 2 überwachten Sicherheitsfeld S2 gekoppelt. Das Flurförderzeug 1 erweitert dadurch das Sicherheitsfeld S1 seines fahrzeugeigenen Kollisionsschutzsystems, indem es zusätzlich das Sicherheitsfeld S2 des externen Kollisionsschutzsystems des Flurförderzeugs 2 mitnutzt.

Hierzu verfügen die Flurförderzeuge 1, 2 jeweils über eine Datensende- und Datenempfangseinrichtung 4, 5, über die die Flurförderzeuge 1, 2 miteinander drahtlos kommunizieren können. Zur Kopplung der Kollisionsschutzsysteme und der Sicherheitsfelder 1, 2 nähern sich die beiden Flurförderzeuge 1, 2 an und beginnen mit der Kommunikation, wobei zunächst eine Identifikation der Flurförderzeuge 1, 2 erfolgt. Falls das vom zu beladenden Flurförderzeug 2 überwachte Sicherheitsfeld S2, also der Gefährdungsbereich, frei ist, gibt das zu beladende Flurförderzeug 2 ein kontinuierliches Freigabesignal drahtlos über die Datensende- und Datenempfangseinrichtungen 4, 5 an das beladende Flurförderzeug 1. Der Beladungsvorgang kann somit beginnen und von dem beladenden Flurförderzeug 1 solange durchgeführt werden, solange das Freigabesignal vorhanden ist.

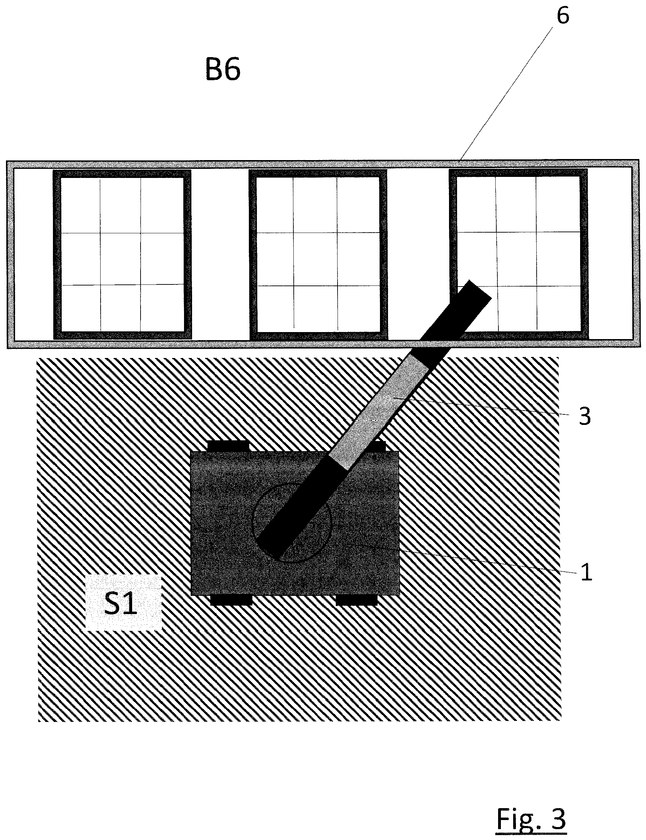

In der Figur 3 ist ein Flurförderzeug 1, das bevorzugt automatisiert ist, beim Greifen in ein Regal 6 einer Regalanlage dargestellt, wobei das Sicherheitsfeld S1 des greifenden Flurförderzeugs 1 überwacht wird. Das Flurförderzeug 1 weist hierzu ein fahrzeugfestes, nicht näher dargestelltes Kollisionsschutzsystem auf, das ein oder mehrere Kollisionsschutzsensoren aufweist und von dem das Sicherheitsfeld S1 des Flurförderzeugs 1 überwacht wird. Beim Greifen des Lastaufnahmemittels 3, beispielsweise eines Roboterarms, in das Regal 6 kann es vorkommen, dass eine Last hinter das Regal 6 in einen vom Sicherheitsfeld S1 nicht erfassten Bereich B6 im Nachbargang des Regals 6 fällt. Somit kann es im Bereich B6 zu einer Gefährdung von Personen kommen, die sich dort aufhalten.

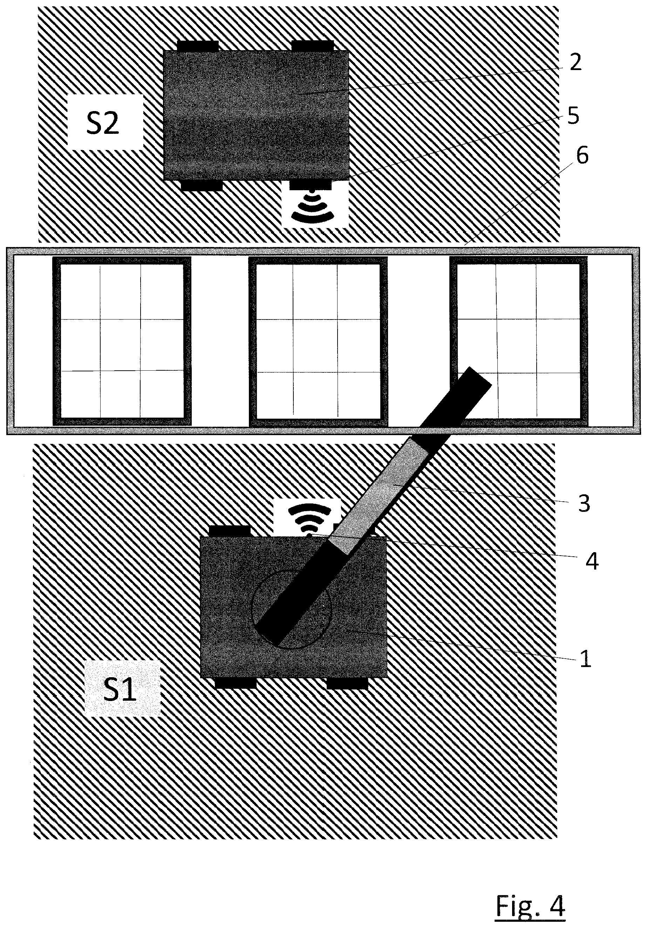

Um diese Gefährdung auszuschließen, ist gemäß der Figur 4 vorgesehen, dass das von einem im Nachbargang befindlichen weiteren Flurförderzeug 2 überwachte Sicherheitsfeld S2 vom Flurförderzeug 1 mitgenutzt wird. Das Flurförderzeug 2, das ebenfalls bevorzugt automatisiert ist, weist hierzu ein fahrzeugfestes, nicht näher dargestelltes Kollisionsschutzsystem auf, das ein oder mehrere Kollisionsschutzsensoren aufweist und von dem das Sicherheitsfeld S2 in dem Nachbargang überwacht wird. Das weitere Flurförderzeug 2 überwacht somit mit dem Sicherheitsfeld S2 den Bereich im Nachbargang. Zur Kopplung des Kollisionsschutzsystems des Flurförderzeugs 1 mit dem weiteren, externen Kollisionsschutzsystem des weiteren Flurförderzeugs 2 und somit zur Kopplung der Sicherheitsfelder S1, S2 kann das Flurförderzeug 2 beispielsweise über optische Signale auf den Gefährdungsbereich im Nachbargang aufmerksam machen. Durch eine optische Kommunikation über die Datensende- und Datenempfangseinrichtungen 4, 5, die gerichtet sein kann, kann sichergestellt werden, dass die richtigen beiden Flurförderzeuge 1, 2 kommunizieren und beide Flurförderzeuge 1, 2 auf derselben Höhe im Regalgang stehen.

Die Flurförderzeuge 1, 2 in den Figuren 3 und 4 sind bevorzugt als automatisierte Fahrzeuge ausgebildet.

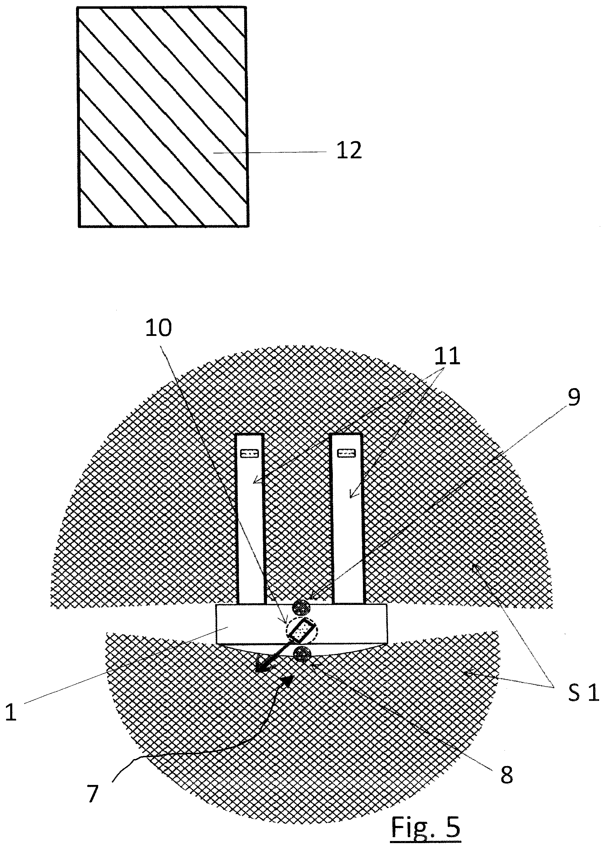

Die Figur 5 zeigt ein unbeladenes, automatisiertes Flurförderzeug 1 mit einem fahrzeugfesten Kollisionsschutzsystem 7 zur Überwachung des Sicherheitsfeldes S1. Das Kollisionsschutzsystem 7 des Flurförderzeugs 1 umfasst einen vorderen Kollisionsschutzsensor 8 und einen hinteren Kollisionsschutzsensor 9. Die Kollisionsschutzsensoren 8, 9 können beispielsweise als Laserscanner ausgebildet sein. Das Flurförderzeug 1 weist ein gelenktes Rad 10 auf, das die mit einem Pfeil dargestellte Fahrtrichtung des Flurförderzeugs 1 vorgibt. Im hinteren Bereich des Flurförderzeugs 1 befinden sich Lastarme 11 zur Aufnahme einer Last 12.

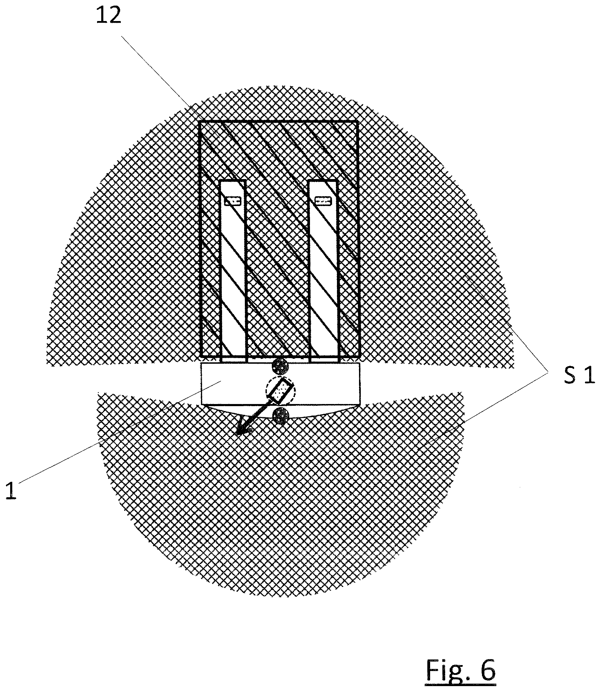

In der Figur 6 ist das Flurförderzeug 1 der Figur 5 im beladenen Zustand dargestellt. Dabei wird ein Bereich des Sicherheitsfeldes S1, der von dem hinteren Kollisionsschutzsensor 9 des Kollisionsschutzsystems 7 erfasst wird, durch die auf die Lastarme 11 aufgenommene Last 12 abgeschattet.

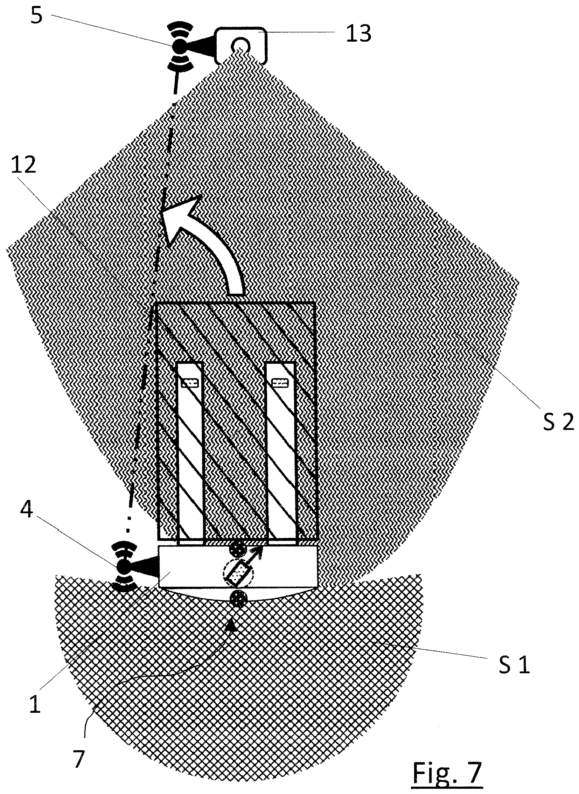

Um eine Gefährdung von Personen in dem durch die Last 12 abgeschatteten Bereich zu verhindern, ist gemäß der Figur 7 vorgesehen, dass das von einem weiteren, externen Kollisionsschutzsystem 13 überwachte Sicherheitsfeld S2 vom Flurförderzeug 1 mitgenutzt wird. Hierzu wird das vom Kollisionsschutzsystem 7 des Flurförderzeugs 1 überwachte Sicherheitsfeld S1 mit dem vom externen Kollisionsschutzsystem 13 überwachten Sicherheitsfeld S2 gekoppelt. Dabei erfolgt eine drahtlose Kommunikation zwischen dem Flurförderzeug 1 und dem externen Kollisionsschutzsystem 13 über die Datensende- und Datenempfangseinrichtungen 4, 5. Das externe Kollisionsschutzsystem 13 kann ortsfest (stationär) oder auf einem weiteren Fahrzeug verbaut sein. Beispielsweise kann das externe Kollisionsschutzsystem 13 an einer schlecht einsehbaren Stelle ortsfest angeordnet sein, so dass das Flurförderzeug 1 dadurch um die Ecke schauen kann. Eine andere Möglichkeit besteht darin, dass das externe Kollisionsschutzsystem 13 auf einem Sicherheitsfahrzeug angebracht ist. Das Sicherheitsfahrzeug kann dem Flurförderzeug 1 vorauseilend fahren und Gefahrenbereiche absichern.

Fährt das Flurförderzeug 1 der Figur 7 in einen mittels des weiteren Kollisionsschutzsystems 13 überwachten Bereich ein, beginnt das Flurförderzeug 1 mit der drahtlosen Kommunikation mit dem weiteren, externen Kollisionsschutzsystem 13. Sobald eine sichere Kommunikation gewährleistet ist, nutzt das Flurförderzeug 1 die Signale des weiteren, externen Kollisionsschutzsystem 13, um seinen Fahrweg abzusichern. Der Fahrweg des Flurförderzeugs 1 ist in der Figur 7 mit dem Pfeil verdeutlicht.

Die Nutzung des weiteren, externen Kollisionsschutzsystems 13 ermöglicht es, dass das automatisierte Flurförderzeug 1 schneller um eine Ecke fahren kann und/oder schneller mit der Last voraus fahren kann, so dass die Umschlagleistung des automatisierten Flurförderzeugs 1 erhöht werden kann und sich eine erhöhte Sicherheit ergibt.

Die in den Figuren 1 bis 7 beschriebenen Kollisionsschutzsysteme sind bevorzugt als Personenschutzanlagen ausgebildet, die zumindest einen Laserscanner aufweisen.

Mit der Erfindung wird somit erzielt, dass das Flurförderzeug 1 der Figuren 1 bis 7 nicht mehr nur das eigene, fahrzeugfeste Kollisionsschutzsystem, beispielsweise eine fahrzeugfeste Personenschutzanlage, nutzt, sondern das fahrzeugfeste Kollisionsschutzsystem des Flurförderzeugs 1 situationsunabhängig und temporär durch ein weiteres, externes Kollisionsschutzsystem, beispielsweise eine externe Personenschutzanlage, die stationär oder mobil sein kann, erweitert wird. Die Kommunikation des externes Kollisionsschutzsystem mit dem Flurförderzeug 1 erfolgt hierzu bevorzugt drahtlos. Das Flurförderzeug 1 bewegt sich somit in einem von dem weiteren, externen Kollisionsschutzsystem überwachten externen Sicherheitsfeld S2, welches sich dynamisch an die Fahrzeugsituation des Flurförderzeugs 1 und den geplanten Fahrweg anpasst.

## Patentansprüche

1. Verfahren zum Betreiben mindestens eines Flurförderzeugs (1) in einem intralogistischen System, wobei mittels mindestens eines Kollisionsschutzsystems (7) des Flurförderzeugs (1) eine Überwachung mindestens eines Sicherheitsfeldes (S1) in einem Umgebungsbereich des Flurförderzeugs (1) durchgeführt wird, **dadurch gekennzeichnet, dass** das vom Kollisionsschutzsystem (7) des Flurförderzeugs (1) überwachte Sicherheitsfeld (S1) mit mindestens einem weiteren, von mindestens einem weiteren Kollisionsschutzsystem (13) des intralogistischen Systems überwachten, Sicherheitsfeld (S2) gekoppelt wird.

2. Verfahren nach Anspruch 1, **dadurch gekennzeichnet, dass** als weiteres Kollisionsschutzsystem (13) ein mobiles Kollisionsschutzsystem (13) verwendet wird.

3. Verfahren nach Anspruch 2, **dadurch gekennzeichnet, dass** als mobiles Kollisionsschutzsystem (13) ein Kollisionsschutzsystem (13) eines weiteren Flurförderzeugs (2) verwendet wird.

4. Verfahren nach Anspruch 2, **dadurch gekennzeichnet, dass** als mobiles Kollisionsschutzsystem (13) ein Kollisionsschutzsystem eines Sicherheitsfahrzeugs verwendet wird.

5. Verfahren nach Anspruch 4, **dadurch gekennzeichnet, dass** das Sicherheitsfahrzeug dem Flurförderzeug (1) als Begleitfahrzeug zugeordnet ist.

6. Verfahren nach Anspruch 4 oder 5, **dadurch gekennzeichnet, dass** das Sicherheitsfahrzeug auftragsbezogen Sicherheitsfelder (S2) im intralogistischen System überwacht.

7. Verfahren nach einem der Ansprüche 1 bis 6, **dadurch gekennzeichnet, dass** als weiteres Kollisionsschutzsystem (13) ein stationäres Kollisionsschutzsystem (13) verwendet wird.

8. Verfahren nach Anspruch 7, **dadurch gekennzeichnet, dass** als stationäres Kollisionsschutzsystem (13) ein an einem schlecht einsehbaren Bereich des intralogistischen Systems angeordnetes Kollisionsschutzsystem (13) verwendet wird.

9. Verfahren nach Anspruch 7 oder 8, **dadurch gekennzeichnet, dass** als stationäres Kollisionsschutzsystem (13) ein an einer Lastabgabestelle des intralogistischen Systems angeordnetes Kollisionsschutzsystem (13) verwendet wird.

10. Verfahren nach einem der Ansprüche 1 bis 9, **dadurch gekennzeichnet, dass** die Kopplung der Sicherheitsfelder (S1, S2) folgende Verfahrensschritte umfasst:
a) Annäherung des Kollisionsschutzsystems (7) des Flurförderzeugs (1) und des weiteren Kollisionsschutzsystems (13) des intralogistischen Systems,
b) Aufbau einer Datenverbindung zwischen dem Kollisionsschutzsystem (7) des Flurförderzeugs (1) und dem weiteren Kollisionsschutzsystem (13),
c) Prüfung durch das weitere Kollisionsschutzsystem (13), ob das vom weiteren Kollisionsschutzsystem (13) überwachte Sicherheitsfeld (S2) sicher ist, und
d) Senden eines Freigabesignals vom weiteren Kollisionsschutzsystem (13) an das Kollisionsschutzsystem (7) des Flurförderzeugs (1) über die Datenverbindung, falls das vom weiteren Kollisionsschutzsystem (13) überwachte Sicherheitsfeld (S2) frei ist, oder Senden eines Belegtsignals vom weiteren Kollisionsschutzsystem (13) an das Kollisionsschutzsystem (7) des Flurförderzeugs (1) über die Datenverbindung, falls das vom weiteren Kollisionsschutzsystem (13) überwachte Sicherheitsfeld (S2) belegt ist.

11. Verfahren nach Anspruch 10, **dadurch gekennzeichnet, dass** das vom weiteren Kollisionsschutzsystem (13) überwachte Sicherheitsfeld (S2) vom Flurförderzeug (1) genutzt wird, solange das Freigabesignal gesendet wird, oder das vom weiteren Kollisionsschutzsystem (13) überwachte Sicherheitsfeld (S2) vom Flurförderzeug (1) gemieden wird, solange das Belegtsignal gesendet wird.

12. Verfahren nach einem der Ansprüche 1 bis 11, **dadurch gekennzeichnet, dass** das Kollisionsschutzsystem (7) des Flurförderzeugs (1) mit dem weiteren Kollisionsschutzsystem (13) mittels optischer Kommunikation kommuniziert.

13. Verfahren nach Anspruch 12 **dadurch gekennzeichnet, dass** zur optischen Kommunikation mindestens eine optische Sendeeinrichtung und mindestens eine optische Empfangseinrichtung verwendet werden.

14. Verfahren nach Anspruch 13 **dadurch gekennzeichnet, dass** als optische Sendeeinrichtung ein Infrarotsender und als optische Empfangseinrichtung ein Infrarotempfänger verwendet werden.

15. Verfahren nach Anspruch 14 **dadurch gekennzeichnet, dass** als optische Sendeeinrichtung ein Leuchtmittel und als optische Empfangseinrichtung eine Kamera verwendet werden.

16. Verfahren nach einem der Ansprüche 1 bis 11, **dadurch gekennzeichnet, dass** das Kollisionsschutzsystem (7) des Flurförderzeugs (1) mit dem weiteren Kollisionsschutzsystem (13) mittels Funk-Kommunikation kommuniziert.

17. Verfahren nach Anspruch 16, **dadurch gekennzeichnet, dass** die Funk-Kommunikation die Near-Field-Communication-Technologie nutzt.

18. Verfahren nach einem der Ansprüche 1 bis 17, **dadurch gekennzeichnet, dass** zur Überwachung der Sicherheitsfelder (S1, S2) Kollisionsschutzsensoren (8, 9), insbesondere Laserscanner, eingesetzt werden.

19. Verfahren nach einem der Ansprüche 1 bis 18, **dadurch gekennzeichnet, dass** als Flurförderzeug (1) ein autonomes Flurförderzeug (1), insbesondere ein mobiler Kommissionierroboter, verwendet wird.

20. Intralogistisches System zur Durchführung des Verfahrens nach einem der Ansprüche 1 bis 19 mit mindestens einem zur Überwachung mindestens eines Sicherheitsfeldes (S1) ausgebildeten Kollisionsschutzsystem (7) eines Flurförderzeugs (1) und mit mindestens einem zur Überwachung mindestens eines weiteren Sicherheitsfeldes (S2) ausgebildeten weiteren Kollisionsschutzsystem (13) des intralogistischen Systems, wobei die Kollisionsschutzsysteme (7, 13) über Kollisionsschutzsensoren (8, 9) und Datenverarbeitungseinrichtungen sowie Datensende- und Datenempfangseinrichtungen (4, 5) verfügen, **dadurch gekennzeichnet, dass** die Datenverarbeitungseinrichtungen sowie Datensende- und Datenempfangseinrichtungen (4, 5) dazu eingerichtet sind, die von den Kollisionsschutzsystemen (7, 13) überwachten Sicherheitsfelder (S1, S2) zu koppeln.
